# EUROPEAN PATENT SPECIFICATION

(11) **EP 1 511 332 B1**
(45) Date of publication and mention of the grant of the patent: **24.08.2011**
(21) Application number: 03729797.5
(22) Date of filing: 08.05.2003
(51) Int. Cl.: H04W 24/04

(54) **A METHOD FOR AUTOMATED SETTING UP SPECIAL OPERATION MAINTENANCE CHANNEL IN 3G BASE STATION**
VERFAHREN ZUM AUTOMATISIERTEN EINRICHTEN EINES SPEZIELLEN BETRIEBSWARTUNGSKANALS IN EINER 3G-BASISSTATION
PROCEDE D'ETABLISSEMENT AUTOMATIQUE D'UNE VOIE SPECIALE D'ENTRETIEN DE FONCTIONNEMENT DANS UNE STATION DE BASE DE TROISIEME GENERATION

(30) Priority: 13.05.2002 CN 02117710
(43) Date of publication of application: 02.03.2005
(73) Proprietor: China Academy of Telecommunications Technology, Haidian District, Beijing 100191 (CN)
(72) Inventor: CHEN, Ping, Beijing 100083 (CN); WANG, Xiaoyang, Beijing 100083 (CN)
(74) Representative: Mounteney, Simon James
(86) International application number: PCT/CN2003/000334
(87) International publication number: WO 2003/101124

(56) References cited:
- EP-A2- 0 651 586
- WO-A1-96/27267
- "3rd Generation Partnership Project; Technical Specification Group Radio Access Network; UTRAN implementation-specific O&M transport (Release 5)" 3GPP STANDARD; 3GPP TS 25.442, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.0.0, 1 March 2002 (2002-03-01), pages 1-9, XP050368951
- LAUBACH COM21 M ET AL: "Classical IP and ARP over ATM; rfc2225.txt" IETF STANDARD, INTERNET ENGINEERING TASK FORCE, IETF, CH, 1 April 1998 (1998-04-01) , XP015008009 ISSN: 0000-0003

## Description

### Field of the Technology

The present invention relates to mobile communication technique, and more particularly, to a method for 3rd Generation (3G) mobile communication base station (Node B) to set up implementation specific OAM channel in Wideband Code Division Multiple Access (WCDMA) and Time Division Synchronous Code Division Multiple Access (TD-SCDMA) mobile communication system.

### Background of the Invention

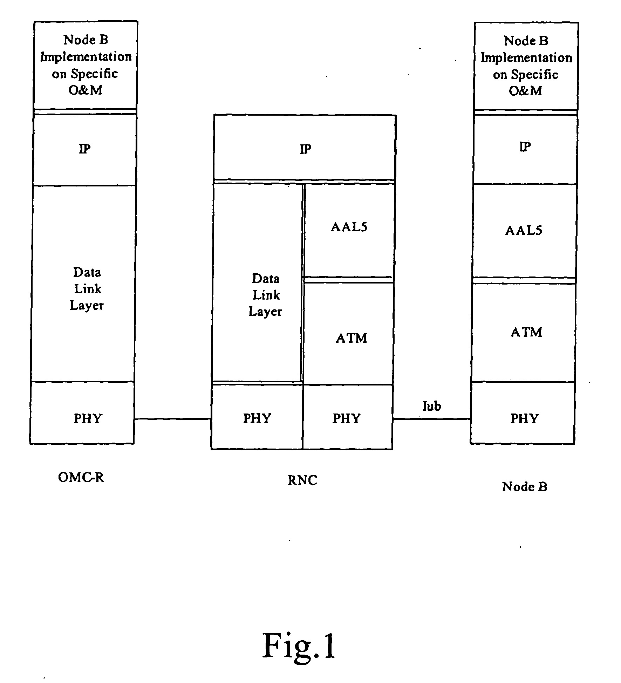

In the WCDMA and TD-SCDMA mobile communication system, Operation & Maintenance (OAM) of Node B can be divided into logic Operation & Maintenance and Implementation Specific O&M. Wherein, logic Operation & Maintenance of Node B is implemented through NBAP protocol, and correspondingly, the logic OAM Channel of Node B will be the signalling bearer of the NBAP, there are several relevant methods for Operation & Maintenance that are clearly specified in the 3GPP criteria. For Node B Implementation Specific OAM channel, the 3GPP criteria provides a protocol stack, which is transparently routed from Node B to OMC-R via the RNC (Radio Network Controller), while Fig.1 shows the transmission protocol stack for Node B Implementation Specific O&M.

As shown in Fig.1, without any relationship with the material Data Link Layer and Physical Layer (PHY), the message on Node B Implementation Specific O&M between Node B and Operations & Maintenance Center (OMC-R) is transmitted based on IP. Wherein, when the Iub interface adopts ATM (Asynchronous Transfer Mode), the signalling bearer for implementing specific Operation & Maintenance between Node B and RNC should be IP over ATM. The Data Link Layer between OMC-R and RNC can be connected through Ethernet, whose corresponding protocol stack is just the IP over Ethernet which has been widely used in computer LAN.

In WCDMA and TD-SCDMA mobile communication system, the 3GPP criteria provides a protocol stack, which is transparently routed from Node B to OMC-R via the RNC, for Node B Implementation Specific O&M Channel, however, the 3GPP provides no detailed solution for the procedure of implementing the protocol stack.

At present, there are mainly three methods for setting up IP over ATM channel between Node B and RNC:

The first one is to implement the goal through configuring relevant data at Node B end and RNC end respectively by operators and maintenance personnel, which is not only inconvenient, but also rather blundering;

The second one is that, while initiating all the Node B at their first time, sending request to OMC-R with the default ATM Permanent Virtual Circuit (PVC) and Internet Protocol (IP) address that has been configured when the equipment leave the manufacturer's workshop, obtaining formal configured data from the OMC-R, and then the Node B communicate with OMC-R with this formal configured PVC and IP address while resetting hereafter, meanwhile, deleting the original default ATM PVC and IP address messages. In this means, it is impossible to supply power to all Node B at same time because of the fixed IP address adopted by the Node B before power on;

The third one is a method for setting up OAM channel automatically, which includes following steps:
(1) Setting up default ATM PVC between Node B and RNC;
(2) The default ATM PVC that has been set up through Step (1) by Node B through broadcasting initiating bootstrap protocol (e.g. BOOTP protocol) request to RNC who is responsible for detecting and handling the (BOOTP) request packet;
(3) The RNC assigning IP address and sending response packet to Node B, wherein, said response packet contains the IP address that is assigned to the Node B;
(4) After obtaining the assigned IP address from the received response message, Node B setting up IP over ATM channel based on the acquired IP address and the default ATM PVC that has been created in step (1), and thereby, setting up OAM channel between Node B and RNC.

Although the OAM channel establishing procedure based on the third method can solve some defects of the first method under certain circumstances, however, there still exist following disadvantages:
(1) All Node B will occupy the default ATM PVC while they work, when Node B connect through series-wound physical topology, power can be supplied to the Node B behind only after the foregoing Node B has been successfully supplied, which means it is impossible to supply power simultaneously to all Node B;
(2) When Node B connect through series-wound physical topology, because the Node B behind has to make PVC switch that is dependent upon its front Node B, moreover, the value of VPI/VCI (Virtual Path Identifier /Virtual Channel Identifier) may also changed, in this case, once some failure in the front Node B makes it impossible to switch PVC, the OAM channel of the behind Node B will be broken;
(3) The series-wound connection between Node Bs makes it impossible to support a little more complicated network environment such as ring physical topology connection;
(4) RNC can only implement the assignment of IP address, and can hardly assume the responsibility for overall assignment and management of IP addresses.

"3^{rd} Generation Partnership Project; Technical Specification Group Radio Access Network; UTRAN implementation-specific O&M transport (Release 5)" discloses the transport of implementation specific O&M signaling between Node B and the Management Platform in case that the transport is routed via the RNC.

"Classical IP and ARP over ATM; rfc 2225.txt" discloses an initial application of classical IP and ARP in an Asynchronous Transfer Mode (ATM) network environment configured as a Logical IP Subnetwork (LIS).

### Summary of the Invention

It is an object to provide a method for 3rd Generation (3G) mobile communication base station (Node B) to set up a implementation specific OAM channel automatically, and more importantly, to solve the problem of setting up IP over ATM channel between Node B and Radio Network Controller (RNC), which is also the problem of configuration of ATM virtual circuit and IP parameters.

In order to realize above object, the present invention provides a method for 3G mobile communication base station (Node B) to automatically establish a implementation specific OAM channel, signalling path for implementing specific Operation & Maintenance between 3G mobile communication base station (Node B) and Radio Network Controller (RNC) is IP over ATM, wherein comprising following steps:
A. Creating a default operation & maintenance ATM Permanent Virtual Circuit (PVC) address for both Radio Network Controller (RNC) in the Radio Network Subsystem (RNS) and each ATM physical port of every 3G mobile communication base station (Node B), and at same time, configuring operation & maintenance ATM Permanent Virtual Circuit (PVC) address at each ATM physical port of every Radio Network Controller (RNC), in order to establish specific OAM channel ATM virtual circuit, the formed address table contains Virtual Path Identifier /Virtual Channel Identifier (VPI/VCI) of each Permanent Virtual Circuit (PVC) address, symbols of occupied or idle state, and relevant terms for indicating their relation with identifiers of 3G mobile communication base station (Node B) devices;
B. Each of 3G mobile communication base station (Node B) submitting application for special operation & maintenance ATM Permanent Virtual Circuit (PVC) to the Radio Network Controller (RNC) through the default operation & maintenance ATM Permanent Virtual Circuit (PVC) address, the application will be sent to all physical ports of said 3G mobile communication base station (Node B);
C. Through searching in said address table, the Radio Network Controller (RNC) assigning special ATM Permanent Virtual Circuit (PVC) channel to all physical ports of each 3G mobile communication base station (Node B) who has submitted application;
D. Radio Network Controller (RNC) sending IP parameter to each 3G mobile communication base station (Node B) on all said configured special ATM Permanent Virtual Circuit (PVC) path.

In Step A above, there are two sets of address at each ATM physical port of the Radio Network Controller (RNC) for configuring said operation & maintenance ATM Permanent Virtual Circuit (PVC), one is for automatic configuring of specific OAM channel ATM virtual circuit, while another is for manual configuring of specific OAM channel ATM virtual circuit.

The method provided by the present invention is to create default OAM PVC path first, and then configure special OAM PVC path for each Node B; after switching of PVC, values of VPI/VCI keep unchanged, so it is unnecessary to employ maintenance switching table.

Comparing with the third automatic setting up method in the background, the method provided by the present invention has following advantages:
(1) The values of VPI/VCI keep unchanged after switching of all PVC, therefore, it is unnecessary to employ maintenance switching table;
(2) The ATM virtual circuit used in the IP over ATM OAM channel according to the present invention is not the default path, and values of VPI/VCI keep unchanged after switching of all PVC, data in all PVC can be transparently transferred to the Node B whose configuration is unfinished, therefore, there are little relevance among different Node B, and failure in one Node B will not influence communication in other Node B, by this means, all the Node B can power on for launching simultaneously, which can provide excellent self-test function and robust property;
(3) The Node B sends its request (OAM PVC REQUEST) to all physical ports of the Node B while it apply for special operation & maintenance PVC via default operation & maintenance ATM Permanent Virtual Circuit (PVC) address (e.g. its identifier is PVC DEFAULT), therefore, when the Node B connects with certain network, its physical ports can connect freely without any limitation, as a result, the scheme of the present invention can support any physical topology structure of the network including much more complicated physical topology link styles such as star topology, tree topology, ring topology, hybrid topology and etc.;
(4) Each Node B can communicate with RNC through several of its ports, and at same time, it can also possess several IP addresses, which means, each physical port of Node B can link with one special ATM virtual circuit PVC for implementing specific OAM channel, therefore, each PVC at every physical ports can be assigned with a IP address in the Node B, which enables the method of the present invention to have an excellent robust property;
(5) According to the present invention, assignment of IP address can be carried out by DHCP server who is independent from the RNC, therefore, it is possible to implement overall assignment and management on the IP addresses.

### Brief Description of the Drawings

Fig.1 is a schematic diagram of transmission protocol stack structure of Node B Implementation Specific O&M;
Fig.2 is a flow chart of RNC operation;
Fig.3 is a flow chart of Node B operation;
Fig.4 is a schematic diagram of Node B setting up OAM channel under the networking style of ring physical topology connection in accordance with the present invention.

### Detailed Description of the Invention

The present invention will be described in more detail hereinafter with reference to the drawings.

According to the protocol stack shown in Fig.1, in order to set up transmission bearer for implementing special Operation and Maintenance signalling, it is necessary to create direct or indirect Physical Layer channel between Node B and OAM system first, and then set up Data Link Layer (including ATM, Ethernet etc.) channel, moreover, it is also necessary to configure IP parameters of network layer to the relevant nodes (Node B, RNC, Operations & Maintenance Center (OMC-R)).

After setting up physical Layer communication, it is also necessary for the two ATM nodes to create ATM virtual circuit for Node B implementation special OAM channel, and assign VP/VC (Virtual Path /Virtual Channel), i.e. configuring ATM virtual circuit.

Of course, it is possible to adopt manual operation method at access end, which means configuring VP/VC at the two ends by engineer and installment personnel, one of the advantages of the method is flexibility in configuration, while its disadvantages include complicated and fallible operation. In case when the access terminal equipment locates at remote areas, configuring of near terminal will become rather difficult, moreover, it will be inconvenient to implement daily maintenance and disposal of failures.

The present invention provides a method to automatically configure ATM virtual circuit in order to establish special OAM channel. And in the 3G Radio Network Subsystem (RNS), RNC and each Node B are provided respectively with a default OAM PVC, e.g. VPI=2, VCI=31, in order to make it simpler, the default OAM PVC will be identified as PVC DEFAULT. At the same time, the operators and maintenance personnel set two sets of OAM PVC addresses for each ATM physical port of the RNC, in order to implement automatic configuration and manual configuration of specific OAM channel ATM virtual circuit respectively, and further identified with PVC SET1 and PVC SET2 respectively. Each PVC in said two sets of OAM PVC address table has a "STATE" term to indicate whether the PVC is idle or occupied (at time of initialization, all the PVCs are configured as idle), moreover, said PVCs also have their own fields Node B EQUIPMENT IDs respectively, which are 48 digitals binary figures, and used for exclusively identifying one Node B who uses the PVC. As shown in Table 1, PVC SET1 or PVC SET2, wherein, NULL refers to null value.

**Table 1:**

| | | |
|---|---|---|
| VPI/VCI | STATE | Node B EQUIPMENT ID |
| 2/32 | OCCUPIED | AF34B2CD193E |
| 2/33 | IDLE | NULL |
| ··· | ··· | ··· |

In order to lower requirements on profundity of ATM address table of the base station interface, it is necessary to limit range of ATM virtual circuit addresses of each Node B, and arrange Valid PVC Range in the RNC for each Node B, As shown in Table 2, including Start VPI/VCI and End VPI/VCI, if there is no such special configuration, then adopts default Valid PVC Range (Default).

**Table 2:**

| | | |
|---|---|---|
| Node B | Start VPI/VCI | End VPI/VCI |
| Default | | |
| NB1 | | |
| NB2 | | |
| ··· | ··· | ··· |

While power on, the Node B will send special OAM PVC request message (OAM PVC ALLOCATE REQUEST) to all the available physical ports with the address which is the default OAM PVC (PVC DEFAULT), the message contains message type of the request and exclusive identifier Node B EQUIPMENT ID of the Node B, at same time, Node B will configure the timer Tallocatetimeout, when there is no response from RNC even after the timer going beyond the preset time, then resending the OAM PVC ALLOCATE REQUEST message.

After receiving a cell whose address is PVC DEFAULT at certain physical port, the RNC will resolve the cell first. If it is an invalid cell, for instance, format of the cell fails to tally with that of above OAM PVC ALLOCATE REQUEST of the Node B, the cell will be discard. Else, if it is OAM PVC ALLOCATE REQUEST, then collectively search in the PVC SET1 first for Node B EQUIPMENT ID contained in the request message. If it is found, then check the STATE that is corresponding to the PVC, if the STATE is occupied, then ignore the message, else, if the STATE is idle, the RNC will send OAM PVC ALLOCATE RESPONSE through PVC DEFAULT to the physical port that received the message, wherein, said OAM PVC ALLOCATE RESPONSE comprises Node B EQUIPMENT ID, OAM PVC ALLOCATING, length of PVC SET1, PVC SET1 (VPI/VCI), length of PVC SET2, PVC SET2 (VPI/VCI) and Valid PVC Range of the Node B, and at same time, identify the STATE of the OAM PVC ALLOCATING in the PVC SET1 table as occupied; else if nothing useful is found, then assign a PVC address OAM PVC ALLOCATING whose identifier is idle from the PVC SET1 set to the Node B as special OAM channel, and the RNC sends OAM PVC ALLOCATE RESPONSE via the PVC DEFAULT to the physical port that received the message, similarly, the OAM PVC ALLOCATE RESPONSE also comprises Node B EQUIPMENT ID, OAM PVC ALLOCATING, length of PVC SET1, PVC SET1(VPI/VCI), length of PVC SET2, PVC SET2 (VPI/VCI) and Valid PVC Range of the Node B, and at same time, identify the STATE of the OAM PVC ALLOCATING in the PVC SET1 table as occupied, and set corresponding value to the Node B EQUIPMENT ID. Through the procedure above, the RNC can assign special OAM PVC to the Node B.

For the Node B who has neither configured special PVC, nor sent OAM PVC ALLOCATE REQUEST, once any of its physical port receives cells, the port will transparently forward the received cells with same VPI/VCI to other physical ports of the Node B.

When certain Node B receives cells with PVC DEFAULT as address from one of its physical ports, if said Node B has just sent OAM PVC ALLOCATE REQUEST message through the PVC DEFAULT, and has not received special OAM PVC that is configured by the RNC, then the Node B will receive the cell. Once the cell is judged to be invalid, it will be discard; else, if it is OAM PVC ALLOCATE REQUEST cell, said Node B will transparently forward the received cell to its other physical ports; else if it is OAM PVC ALLOCATE RESPONSE cell, then check Node B EQUIPMENT ID in the message, if it is not of said Node B, then transparently forward the received cell to other physical ports of said Node B, else if it is of said Node B, then configure special OAM PVC according to the OAM PVC ALLOCATING in the message, configure local PVC SET at Node B based on the PVC SET1 and PVC SET2, and further configure valid ATM address range of the Node B according to the Valid PVC Range.

For the Node B who has finished configuration of OAM channel (including Physical Layer, Data Link Layer and IP layer), other signalling bearer and data bearer are also need to be configured. The signalling bearer and data bearer who cannot be configure ATM virtual circuit in the PVC DEFAULT and PVC SET (including SET1 and SET2) can only arrange other ATM virtual circuits in the valid PVC range.

For certain Node B whose OAM channel has had configured and could normally work, while configuring other signalling bearer and data bearer, the system may receive and process the cell that are received by one of its physical ports and identified with the ATM address that is assigned to the Node B; for the cell that is identified with the one other than the said assigned ATM address, if the ATM address is within the PVC SET and Valid PVC Range, or is the PVC DEFAULT, then forwards the cell with the original VPI/VCI address to other physical port of said Node B; else the cell will be discard to prevent junk data storm.

When the PVC of the specific OAM channel needs manual configuration, the PVC address should be selected from the PVC SET2. Once PVC address in the PVC SET2 is selected, its STATE will become occupied, and the Node B EQUIPMENT ID will be set as corresponding value.

While receiving cells besides PVC DEFAULT and PVC SET, and treating the cell as other signaling, data or invalid cell, the RNC will dispose the cell correspondingly.

In order to realize self-test function of the RNS system, the Node B whose special OAM PVC has been configured needs to send OAM PVC REPORT message to the RNC through special OAM PVC at certain time intervals (Tselftest), to report its OAM PVC parameters. After receiving the report message, the RNC will return OAM PVC RESPONSE message to said Node B. Both OAM PVC REPORT message and OAM PVC RESPONSE message comprise Node B Equipment ID and OAM PVC ALLOCATING in their formats. If the RNC has not received OAM PVC REPORT of a Node B within certain period of time (Ttimeout) after the preset time (Tselftest) (Ttimeout>Tselftest), said RNC may send alarm message (Node B TIMEOUT) to the OMC-R, at same time, if the operators and maintenance personnel consider that the Node B has been erased from the network, they may identify STATE of the corresponding PVC in the PVC SET as idle. If the Node B has not received OAM PVC REPONSE message within certain period of time (Tnodebtimeout) after sending OAM PVC REPORT message, said Node B will send OAM PVC ALLOCATE REQUEST from PVC DEFAULT of the corresponding physical port, to apply once again for special ATM virtual circuit for implementing specific OAM channel.

When the RNC received PVC cells of the PVC SET, if the cells are OAM PVC REPORT message, they will initialize Ttimeout of relevant Node B and retime; if it is DHCP packet, it will be sent to the DHCP server to apply IP parameter, or to the corresponding physical ports to inform the IP parameter assigned by the DHCP server to the relevant Node B; else if it is a ordinary IP packet, then implement IP routing; if it is an invalid cell, then it will be discard.

The Table 3 illuminates definition of message type within the PVC DEFAULT, including codes of the OAM PVC ALLOCATE REQUEST and OAM PVC ALLOCATE RESPONSE.

**Table 3:**

| MESSAGE TYPE | CODE |
|---|---|
| OAM PVC ALLOCATE REQUEST | 10000000 |
| OAM PVC ALLOCATE RESPONSE | 10000001 |

The Table 4 below shows definition of message type in Node B special OAM PVC (PVC SET), including codes of the OAM PVC REPORT, OAM PVC RESPONSE and IPV4 and IPV6 packets.

**Table 4:**

| MESSAGE TYPE | CODE |
|---|---|
| OAM PVC REPORT | 10000000 |
| OAM PVC RESPONSE | 10000001 |
| IPV4 | 0100XXXX |
| IPV6 | 0110XXXX |

After setting up communication at Data Link Layer, the correspondent node should also configure IP parameter in order to establish communication at IP layer.

IP parameter configuration can be manually implemented, whose advantage is its flexible configure, while the disadvantage are its complicated operation and fallibility.

The present invention adopts centralized dynamic IP parameter allocation method, which has three available protocols: RARP, BOOTP and DHCP.

Wherein, said RARP work at Data Link Layer, and cannot go beyond router and work across several subnets, therefore, the RARP is impracticable in the cases of the present invention.

While BOOTP and DHCP work at IP layer, they can stride over router and work across several subnets, therefore, the above protocols are suitable for the cases of the present invention. Wherein, DHCP is the expansion of the BOOTP and has same packet format with that of the BOOTP, therefore, forward proxy of the BOOTP can be used to send DHCP packet making it possible to implement inter-operation between BOOTP and DHCP.

For the reason that application of the DHCP is much wider than that of the BOOTP at present, the present invention prefers the DHCP protocol.

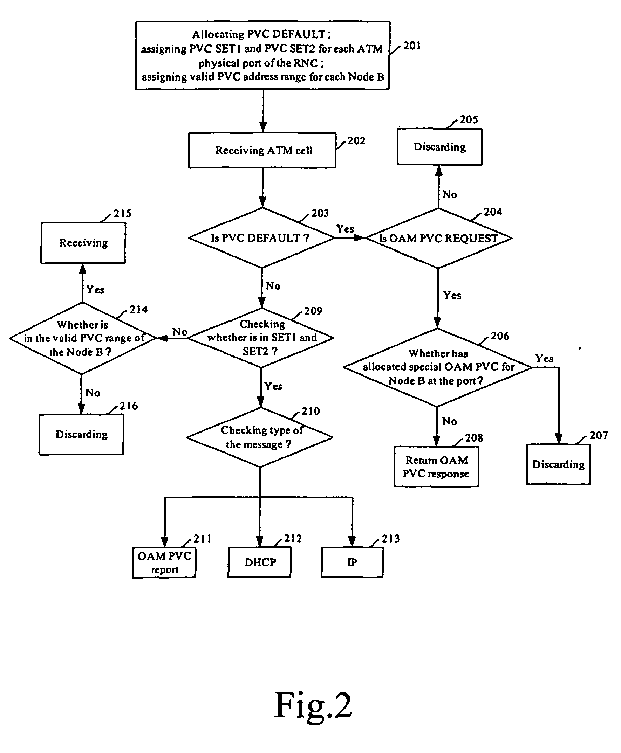

Fig.2 shows an operation flow chart at RNC end. Wherein, exact meaning of each column is as follows corresponding to the serial number:

Step 201, including three sub-steps: after supplying power and initiating, the RNC setting up default PVC-PVC DEFAULT between the RNC and Node B at each of its ATM physical port; the operators and maintenance personnel assigning PVC SET1 and PVC SET2 to each ATM physical port of the RNC; allocating valid PVC Range resource in advance among each Node B managed by the RNC, and then, said RNC may wait to receive ATM cells at each of its ATM physical ports.

Step 202, RNC receiving an ATM cell at certain of its ATM physical ports.

Step 203, the RNC checking whether said ATM cell address is PVC DEFAULT?

Step 204, if the ATM cell address is determined to be PVC DEFAULT at Step 203, then further checking whether the received cell is an OAM PVC ALLOCATE REQUEST message at Step 204?

Step 205, if the received cell is not an OAM PVC ALLOCATE REQUEST message, then discarding the ATM cell.

Step 206, if the received cell is an OAM PVC ALLOCATE REQUEST message, then further checking whether the special OAM PVC has been assigned at the port to the Node B?

Step 207, if the special OAM PVC has been assigned at the port to the Node B, then discarding the received OAM PVC ALLOCATE REQUEST message.

Step 208, else if the port has not assigned any special OAM PVC for the Node B, then returning assigned special OAM PVC message (OAM PVC ALLOCATE RESPONSE) at PVC DEFAULT of said port.

Step 209, if in Step 203, the ATM cell address received at certain port of the RNC is not PVC DEFAULT, then checking whether the ATM cell address is in the PVC SET1 and PVC SET2 of the port?

Step 210, if the ATM cell address is in the PVC SET1 and PVC SET2, then further checking type of the received message.

Step 211, if type of the message is OAM PVC REPORT, then resetting the timer (Tselftest), if the RNC has not received OAM PVC REPORT of a Node B within certain period of time (Ttimeout>Tselftest), then the RNC will send alarm message (Node B TIMEOUT) to the OMC-R.

Step 212, if the type of said message is DHCP packet, then sending the DHCP packet to the DHCP server to apply IP parameter, or sending to relevant physical port of the RNC, and informing the IP parameter assigned by the DHCP server to the relevant Node B.

Step 213, if type of the message is an ordinary IP packet, then making IP routing. Else if it is an invalid cell, then discarding the cell.

Step 214, in step 209, if it is certain that the ATM cell address is not in the PVC SET1 and PVC SET2, then further checking whether the ATM cell address is in the Valid PVC Range of the corresponding Node B?

Step 215, if the ATM cell address is in Valid PVC Range of the Node B, then receiving the ATM cell, and disposing accordingly.

Step 216, else if the ATM cell address is not in the Valid PVC Range of the relevant Node B, then discarding the cell.

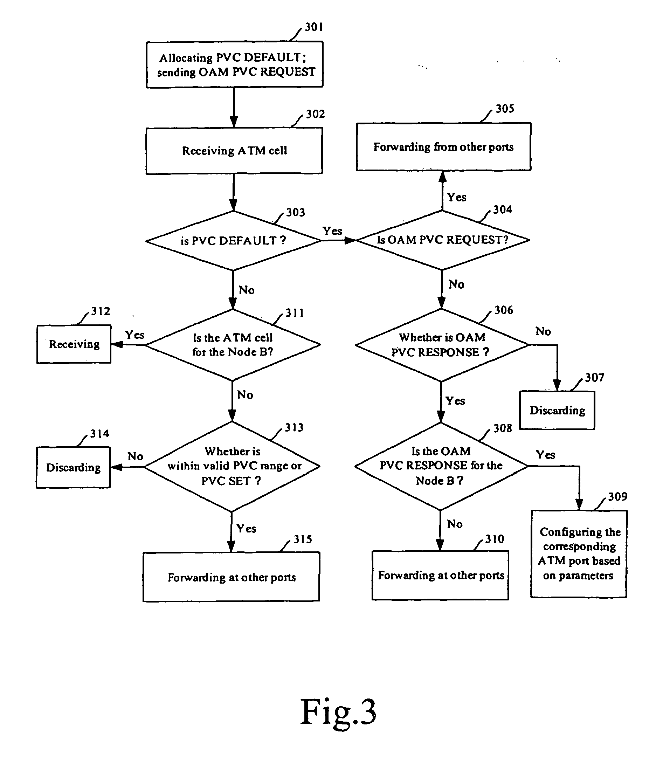

Now referring to Fig.3, it is flow chart of an operation at Node B end. Wherein, exact meaning of each column is as follows corresponding to the serial number:

Step 301, including two sub-steps: after supplying power and initiating, the Node B setting up default PVC-PVC DEFAULT between Node B at each of its ATM physical port and other ATM node (RNC or Node B); and sending OAM PVC ALLOCATE REQUEST message through PVC DEFAULT of all the ports of the Node B.

Step 302, Node B receiving ATM cell sent from the RNC at one of its physical ports.

Step 303, Node B checking whether said ATM cell address is PVC DEFAULT?

Step 304, if the ATM cell address is PVC DEFAULT, then further checking whether the received ATM cell is an OAM PVC ALLOCATE REQUEST message?

Step 305, if what has been received is an OAM PVC ALLOCATE REQUEST message, then forwarding the message from other ATM ports of the Node B with PVC DEFAULT as ATM cell address.

Step 306, if what has been received is not OAM PVC ALLOCATE REQUEST message, then further checking whether it is an OAM PVC ALLOCATE RESPONSE message?

Step 307, if the received message is not OAM PVC ALLOCATE RESPONSE message, then discarding the message.

Step 308, else if what has been received is OAM PVC ALLOCATE RESPONSE message, then checking whether the message is OAM PVC ALLOCATE RESPONSE sent to the Node B?

Step 309, if said message is OAM PVC ALLOCATE RESPONSE sent to the Node B, then configuring relevant ATM port of said Node B according to parameters provided in the message.

Step 310, else if it is not OAM PVC ALLOCATE RESPONSE sent to the Node B, then forwarding the message from other ATM port of the Node B with PVC DEFAULT as ATM cell address.

Step 311, if it is certain that the ATM cell address is not PVC DEFAULT after judgment made in Step 303, then checking whether it is the cell sent to the Node B?

Step 312, if it is the ATM cell sent to said Node B, then receiving and disposing the cell correspondingly.

Step 313, else if it is not the ATM cell for said Node B, then checking whether the ATM cell address is within Valid PVC Range or PVC SET of said Node B?

Step 314, if the ATM cell address is not in the valid PVC Range or PVC SET of said Node B, then discarding the message.

Step 315, else if the ATM cell address is in the valid PVC Range or PVC SET of said Node B, then forwarding the message from other ATM port of the Node B with original VPI/VCI address.

After configuring the special OAM PVC, said Node B may configure IP parameter on special OAM PVC through DHCP protocol, and send OAM PVC REPORT message on special OAM PVC regularly.

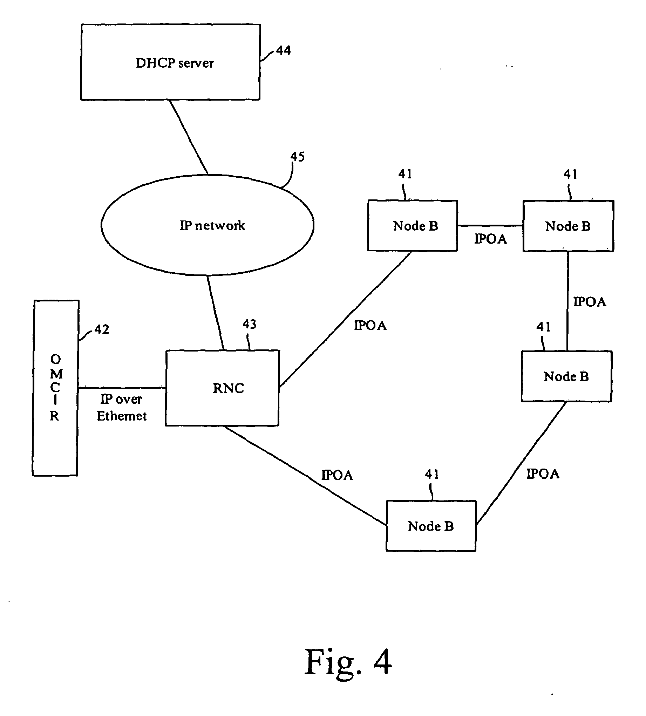

Now referring to Fig.4, which shows one embodiment of the present invention, it is a schematic graph showing the procedure that Node B establishes OAM channel under ring topology networking style. Several Node B 41 connect to construct network with ring topology structure, while OMC-R 42 and RNC 43 connect through Ethernet (IP over Ethernet), Node B and RNC connect with ATM, DHCP server 44 can be configured in network, and IP parameter of Node Bs can be configured via DHCP.

Method of the present invention is to provide a default OAM PVC first, then configure special OAM channel through default OAM PVC, at last establish ATM connection. The procedure of embodiment shown in Fig.4 for implementing specific Operation & Maintenance (O&M) comprises following aspects:
When a Node B 41 joins in an existing ring, before power on and successful initiation, the node transparently transmitting all the ATM cells that pass the node without any influence on the original communication;
After initiating successfully, the Node B 41 sending OAM PVC ALLOCATE REQUEST (OPAR) via all its available physical ports (e.g. two ports).

After receiving OAM PVC ALLOCATE REQUEST at its two ports respectively, RNC 43 sending OAM PVC ALLOCATE RESPONSE (OPAR) to the Node B through the two ports separately.

After receiving two OAM PVC ALLOCATE RESPONSE messages from said ports separately, the Node assigning special operation & maintenance PVC for two physical ports of the Node B respectively according to parameters of the two messages.

After configuring two special operation & maintenance PVC, the Node B sending DHCP IP parameter request message through special PVC, as soon as the message reaches RNC, the RNC routing the message to the DHCP server 44 via IP network 45, after receiving the DHCP IP parameter request, the DHCP server 44 assigning IP parameter for the Node B and sending DHCP IP parameter allocating message, after said message reaching RNC 43 through IP network 45, the RNC 43 sending the DHCP IP parameter allocating message to the Node B through special operation & maintenance PVC of the corresponding port, by this means, the Node B finishes the procedure of configuring its IP parameter.

Under condition of above ring topology networking, there are two paths to reach RNC 43 for a Node B, therefore, two special operation & maintenance PVCs could be allocated, and the Node B can also simultaneously configure two IP addresses for the two special operation & maintenance PVCs,. Of course, there are other special measures for the case, for instance, the Node B can assign ports of certain direction to be used preferentially, to prescribe that each Node B can only use one special PVC and one IP address.

Through IPOA channel between RNC 43 and Node B 41, and IP channel between RNC 43 and OMC-R 42, the Node B 41 can implement transmission of special Operation and Maintenance messages.

The embodiment shown in Fig.4 illuminates the method of the present invention for 3G base station to implement configuring of specific OAM channels, which can be applied in any physical topology structure with powerful self-test function and robust property.

Considering flexibility of the system, manual interface function is also necessary besides providing automatic transmission channel allocating function.

It is noticeable that, the reserved values of ATM should be kept untouched while RNC allocating VPI/VCI, for any details, refers to I.150 and I.361 of the ITU-T.

## Claims

1. A method for automatic setting up Node B implementation specific OAM channel, wherein, the signalling channel of implementation specific OAM between Node B and RNC is IP over ATM, **characterized in that** the method comprises the steps of:
A) creating (201) a default operation & maintenance ATM PVC address for each ATM physical port of RNC and each ATM physical port of every Node B, respectively; for each ATM physical port of RNC, setting (201) a operation & maintenance ATM PVC address used for specific OAM channel ATM virtual circuit setup, and thereby forming a address table which contains VPI/VCI of each PVC address, STATE of occupied or idle and Node B equipment ID;
B) through all physical ports, each of Node B sending (301) a request message for special operation & maintenance ATM PVC allocation to the RNC with the default operation & maintenance ATM PVC address;
C) after receiving the request message, the RNC searching in said address table, and allocating (208) special ATM PVC channel to all physical ports of every Node B who has sent the request message;
D) RNC sending (212) IP parameters to each Node B through all configured special ATM PVC channel.

2. The method of claim 1, wherein there are two sets of the operation & maintenance ATM PVC address, wherein one set is for automatic configuring of specific OAM channel ATM virtual circuit, the other set is for manual configuring of specific OAM channel ATM virtual circuit.

3. The method of claim 1, wherein in initiating state of the RNC, every STATE in the address table is set as idle.

4. The method of claim 1, wherein said Step A further comprises the step of:
RNC setting valid special ATM PVC address range among ATM addresses for every Node B through start VPI/VCI and end VPI/VCI, and said operation & maintenance ATM PVC address is within or out of the address range.

5. The method of claim 1, wherein the request message of Step B at least comprises a exclusive equipment ID of Node B.

6. The method of claim 1, wherein the request message of Step B is sent (301) through all available physical ports while Node B power on, and is resent when fails to receive response message from the RNC after preset period of time.

7. The method of claim 1, wherein said step B further comprises the step of:
for the Node B to which the special operation & maintenance ATM PVC channel has not been allocated, forwarding ATM cell to other available physical ports of the Node B besides the port that received said ATM cell with VPI/VCI got in the received ATM cell before sending said request message for special operation & maintenance ATM PVC allocation.

8. The method of claim 5, wherein said Step C further comprises the steps of:
c1) for the valid received request message, the RNC searching in said address table with the Node B equipment ID contained in the message;
c2) checking the STATE to determine whether the STATE is "occupied" or "idle" for the table term whose equipment ID have been found;
c3) if the STATE is "idle", then sending response message via the physical ports that have received the request messages with said default operation & maintenance ATM PVC address, wherein, said response message at least includes VPI/VCI in said address table and valid operation & maintenance ATM PVC address range and Node B equipment ID, and simultaneously updating the corresponding STATE as "occupied";
c4) for the equipment ID being not found in Step c2, selecting one table term whose STATE is "idle" directly from the address table, and then executing the same steps described in Step c3;
c5) after receiving said response message, the Node B checking equipment ID in the response message, if said equipment ID is not equipment ID of the Node B, then forwarding(310) the response message to other available physical ports other than the one that received said response message, else if the equipment ID is equipment ID of the Node B, then allocating (309) local special operation & maintenance PVC, local address for configuration of the specific OAM channel ATM virtual circuit and valid ATM address range for configuration of Node B based on the response message.

9. The method of claim 8, further comprises:
discarding (205) invalid message that are not the message for special operation & maintenance ATM PVC address allocation request in Step c1, and
ignoring the request message when the STATE in step c2 is "occupied".

10. The method of claim 8 or 9, wherein said valid message or invalid message are determined according to the format of the special operation & maintenance ATM PVC request message, the messages that are accord with the format of the message are judged as valid messages, else, invalid message.

11. The method of claim 8, wherein said Step c 1 further comprises the steps of:
when a address of a ATM cell received at a physical port of the RNC is not said default operation & maintenance ATM PVC address, checking (209) whether the ATM cell address exists in the address table of the physical port; if yes, then making (211-213) process after message type judgment; otherwise, further checking (214) whether the ATM cell address locates within the valid ATM PVC address range of the Node B;
receiving (215) the ATM cell whose address is within the address range and forwarding the cell to other physical ports;
discarding (216) the ATM cell whose address is beyond said address range.

12. The method of claim 8, wherein said step c5 further comprises the steps of:
if said equipment ID is not equipment ID of the Node B, checking (313) whether the received ATM cell address is in the valid ATM PVC address range of the Node B, or locates in said address table;
receiving (315) the ATM cell whose address is within the valid ATM PVC address range or the address table, and forwarding the cell to other physical ports;
discarding (314) the ATM cell whose address is beyond said valid ATM PVC address range or the address table.

13. The method of claim 1, further comprises the steps of:
for the Node B who has sent said special operation & maintenance ATM PVC request message but has not got special operation & maintenance ATM PVC channel allocation, when any physical port receives ATM cell whose address is said default operation & maintenance ATM PVC, transparently transmitting the special operation & maintenance ATM PVC request message to other available physical ports besides said port.

14. The method of claim 1, wherein said step D further comprises the steps of:
Node B sending DHCP IP parameter request message through all configured special operation & maintenance ATM PVC channel;
RNC routing and sending (212) the request message to the DHCP server through corresponding physical port in order to apply IP parameter;
the DHCP server assigning IP address for the Node B and sending DHCP IP address allocating message;
the corresponding physical port of the RNC notifying (212) the IP parameter that is assigned by the DHCP server to the relevant Node B through all said configured special operation & maintenance ATM PVC channels.

15. The method of claim 1, wherein said step D further comprises the steps of:
the Node B regularly sending the message that reports operation & maintenance ATM PVC parameter to the RNC through the configured special operation & maintenance ATM PVC channel;
after receiving the report message, the RNC returning response message to the Node B.

16. The method of claim 15, further comprises the steps of:
the RNC who has not received said report message within preset period of time sending (211) alarm message to OMC-R;
the Node B who has not received said response message within preset period of time applying the special operation & maintenance ATM PVC channel once again.

## Patentansprüche

1. Verfahren zum automatisierten Einrichten eines Node-B-implementatiostsspezifischen OAM-Kanals, wobei der Signalisierungskanal der implementationsspezifischen OAM zwischen dem Node B und der RNC IP over ATM ist, **dadurch gekennzeichnet, dass** das Verfahren die folgenden Schritte umfasst:
A) Erzeugen (201) einer standardmäßigen Betrieb-und-Wartung-ATM-PVC-Adresse für jeden physikalischen ATM-Port der RNC bzw. jedes physikalischen ATM-Ports von jedem Node B; für jeden physikalischen ATM-Port der RNC Einstellen (201) einer Betzieb-und-Wartung-ATM-PVC-Adresse, die für virtuelle ATM-Schaltungseinrichtung des spezifischen OAM-Kanals verwendet wird, und **dadurch** Bilden einer Adresstabelle, die einen VPI/VCI jeder PVC-Adresse, einen STATE als belegt oder frei und eine Node-B-Ausrüstungs-ID enthält;
B) durch alle physikalischen Ports Senden (301), durch jede der Node B, einer Anforderungsnachricht für spezielle Betrieb-und-Wartung-ATM-PVC-Zuteilung an die RNC mit der standardmäßigen Betrieb-und-Wartung-ATM-PVC-Adresse;
C) nach Empfang der Anforderungsnachricht Suchen, durch die RNC, in der Adresstabelle und Zuteilen (208) eines speziellen ATM-PVC-Kanals an alle physikalischen Ports jedes Node B, der die Anforderungsnachricht gesandt hat;
D) Senden (212), durch die RNC, von IP-Parametern an jeden Node B durch alle konfigurierten speziellen ATM-PVC-Kanäle.

2. Verfahren nach Anspruch 1, wobei zwei Sätze der Betrieb-und-Wartung-ATM-PVC-Adresse vorhanden sind, wobei ein Satz für automatische Konfiguration der virtuellen ATM-Schaltung des spezifischen OAM-Kanals ist, der andere Satz für manuelle Konfiguration der virtuellen ATM-Schaltung des spezifischen OAM-Kanals ist.

3. Verfahren nach Anspruch 1, wobei im Einleitungszustand der RNC jeder STATE in der Adresstabelle als frei eingestellt ist.

4. Verfahren nach Anspruch 1, wobei der Schritt A weiter den folgenden Schritt umfasst:
Einstellen, durch die RNC, eines gültigen speziellen ATM-PVC-Adressbereichs unter ATM-Adressen für jeden Node B von Start-VPI/VCI bis Ende-VPI/VCI, und wobei die Betrieb-und-Wartung-ATM-PVC-Adresse innerhalb oder außerhalb des Adressbereichs ist.

5. Verfahren nach Anspruch 1, wobei die Anforderungsnachricht von Schritt B mindestens eine exklusive Auszüstungs-ID des Node B umfasst.

6. Verfahren nach Anspruch 1, wobei die Anforderungsnachricht von Schritt B durch alle verfügbaren physikalischen Ports gesandt wird (301), während die Leistung des Node B eingeschaltet ist, und erneut gesandt wird, wenn der Empfang einer Antwortnachricht von der RNC nach einer im Voraus eingestellten Zeitperiode fehlschlägt.

7. Verfahren nach Anspruch 1, wobei der Schritt B weiter den folgenden Schritt umfasst:
für den Node B, an den der spezielle Betrieb-und-Wartung-ATM-PVC-Kanal nicht zugeteilt wurde, Weiterleiten einer ATM-Zelle an andere verfügbare physikalische Ports des Node B außer dem Port, der die ATM-Zelle empfangen hat, wobei der VPI/VCI vor dem Senden der Anforderungsnachricht für spezielle Betrieb-und Wartung-ATM-PVC-Zuteilung in die empfangene ATM-Zelle gelangte.

8. Verfahren nach Anspruch 5, wobei der Schritt C weiter die folgenden Schritte umfasst:
c1) für die gültige empfangene Anforderungsnachricht, Suchen, durch die RNC, in der Adresstabelle mit der Node-B-Ausrüstungs-IC, die in der Nachricht enthalten ist;
c2) Prüfen des STATE zum Bestimmen, ob der STATE für den Tabellenterm, dessen Ausrüstungs-ID gefunden wurde, "belegt" oder "frei" ist;
c3) wenn der STATE "frei" ist, dann Senden einer Antwortnachricht über die physikalischen Port, die die Anforderungsnachrichten empfangen haben, mit der standardmäßigen Betrieb-und-Wartung-ATM-PVC-Adresse, wobei die Antwortnachricht mindestens den VPI/VCI in der Adresstabelle und den gültigen Betrieb-und-Wartung-ATM-PVC-Adressbereich und die Node-B-Ausrüstungs-ID enthält, und gleichzeitiges Aktualisieren des korrespondierenden STATE als "belegt";
c4) für die Auszüstungs-ID, die in Schritt c2 nicht gefunden wurde, Auswählen eines Tabellenterms, dessen STATE "frei" ist, direkt aus der Adresstabelle und dann Ausführen derselben in Schritt c3 beschriebenen Schritte;
c5) nach Empfang der Antwortnachricht, Prüfen, durch den Node B, der Ausrüstungs-ID in der Antwortnachricht, wenn die Ausrüstungs-ID nicht die Ausrüstungs-ID des Node B ist, dann Weiterleiten (310) der Antwortnachricht an andere verfügbare physikalische Ports außer dem einen, der die Antwortnachricht empfangen hat, anderenfalls, wenn die Ausrüstungs-ID die Ausrüstungs-ID des Node B ist, dann Zuteilen (309) einer lokalen speziellen Betrieb-und- Wartung-PVC, einer lokalen Adresse für Konfiguration der virtuellen ATM-Schaltung des spezifischen OAM-Kanals und eines gültigen ATM-Adressbereichs für Konfiguration des Node B basierend auf der Antwortnachricht.

9. Verfahren nach Anspruch 8, weiter umfassend:
Verwerfen (205) von ungültigen Nachrichten, die nicht die Nachrichten für die spezielle Betrieb-und-Wartung-ATM-PVC-Adresszuteilungsanforderung in Schritt c1 sind, und
Ignorieren der Anforderungsnachricht, wenn der STATE in Schritt c2 "belegt" ist.

10. Verfahren nach Anspruch 8 oder 9, wobei die gültige Nachricht oder ungültige Nachricht gemäß dem Format der speziellen Betrieb-und-Wartung-ATM-PVC-Anforderungsnachricht bestimmt wird, wobei die Nachrichten, die mit dem Format der Nachrichten übereinstimmen, als gültige Nachrichten und anderenfalls als ungültige Nachrichten bewertet werden.

11. Verfahren nach Anspruch 8, wobei der Schritt c1 weiter die folgenden Schritte umfasst:
wenn eine Adresse einer ATM-Zelle, die an einem physikalischen Port der RNC empfangen wird, nicht die standardmäßige Betrieb-und-Wartung-ATM-PVC-Adresse ist, Prüfen (209), ob die ATM-Zelladresse in der Adresstabelle des physikalischen Ports vorhanden ist; wenn ja, dann Durchführen (211 - 213) des Prozesses gemäß der Bewetrtung des Nachrichtentyps; anderenfalls weiteres Prüfen (214), ob die ATM-Zelladresse sich in dem gültigen ATM-PVC-Adzessbereich des Node B befindet;
Empfangen (215) der ATM-Zelle, deren Adresse in dem Adressbereich ist, und Weiterleiten der Zelle an andere physikalische Ports;
Verwerfen (216) der ATM-Zelle, deren Adresse außerhalb des Adressbereichs ist.

12. Verfahren nach Anspruch 8, wobei der Schritt c5 weiter die folgenden Schritte umfasst:
wenn die Ausrüstungs-ID nicht die Ausrüstungs-ID des Node B ist, Prüfen (313), ob die empfangene ATM-Zelladresse in dem gültigen ATM-PVC-Adressbereich des Node B ist oder sich in der Adresstabelle befindet;
Empfangen (315) der ATM-Zelle, deren Adresse in dem gültigen ATM-PVC-Adressbereich oder der Adresstabelle ist, und Weiterleiten der Zelle an andere physikalische Ports;
Verwerfen (314) der ATM-Zelle, deren Adresse außerhalb des gültigen ATM-PVC-Adressbereichs oder der Adresstabelle ist.

13. Verfahren nach Anspruch 1, weiter die folgenden Schritte umfassend:
für den Node B, der die spezielle Betrieb-und-Wartung-ATM-PVC-Anforderungsnachricht gesandt hat, aber keine spezielle Betrieb-und-Wartung-ATM-PVC-Kanalzuteilung erhalten hat, wenn irgendein physikalischer Port eine ATM-Zelle empfängt, deren Adresse die standardmäßige Betrieb-und-Wartung-ATM-PVC ist, transparentes Übertragen der speziellen Betrieb-und-Wartung-ATM-PVC-Anforderungsnachricht an andere physikalische Ports außer dem Port.

14. Verfahren nach Anspruch 1, wobei der Schritt D weiter die folgenden Schritte umfasst:
Senden, durch den Node B, einer DHCP-IP-Parameter-Anforderungsnachricht durch alle konfigurierten speziellen Betrieb-und-Wartung-ATM-PVC-Kanäle;
Leiten und Senden (212), durch die RNC, der Anforderungsnachricht an den DHCP-Server durch einen korrespondierenden physikalischen Port zum Anwenden des IP-Parameters;
Zuweisen, durch den DHCP-Server, einer IP-Adresse für den Node B und Senden einer DHCP-IP-Adresszuteilungsnachricht;
Benachrichtigen (212), durch den korrespondierenden physikalischen Port der RNC, des IP-Parameters, der vom DHCP-Server dem relevanten Node B zugewiesen ist, durch alle der konfigurierten speziellen Betrieb-und-Wartung-ATM-PVC-Kanäle.

15. Verfahren nach Anspruch 1, wobei der Schritt D weiter die folgenden Schritte umfasst:
regelmäßiges Senden, durch den Node B, der Nachricht, die den Betrieb-und-Wartung-ATM-PVC-Parameter an die RNC berichtet, durch den konfigurierten speziellen Betrieb-und-Wartung-ATM-PVC-Kanal;
nach Empfang der Berichtsnachricht, Zurücksenden, durch die RNC, der Antwortnachricht an den Node B.

16. Verfahren nach Anspruch 15, weiter die folgenden Schritte umfassend:
Senden (211), durch die RNC, die die Berichtsnachricht innerhalb der im Voraus eingestellten Zeitperiode nicht empfangen hat, einer Alarmnachricht an OMC-R;
erneutes Anwenden, durch den Node B, der die Antwortnachricht innerhalb der im Voraus eingestellten Zeitperiode nicht empfangen hat, des speziellen Betrieb-und-Wartung-ATM-PVC-Kanals.

## Revendications

1. Procédé d'établissement automatique d'un canal OAM spécifique à une mise en oeuvre de station « noeud B », dans lequel, le canal de signalisation de fonctionnalité OAM spécifique à une mise en oeuvre entre une station « noeud B » et un contrôleur RNC est le mode IP sur ATM, **caractérisé en ce que** le procédé comprend les étapes ci-dessous consistant à :
A) créer (201) une adresse de circuit virtuel permanent (PVC) de mode de transfert asynchrone (ATM) d'exploitation et de maintenance par défaut pour chaque port physique à mode ATM de contrôleur RNC et chaque port physique à mode ATM de chaque station « noeud B », respectivement ; pour chaque port physique à mode ATM de contrôleur RNC, définir (201) une adresse de circuit PVC à mode ATM, d'exploitation et de maintenance utilisée pour une configuration de circuit virtuel à mode ATM de canal OAM spécifique, et former par conséquent une table d'adresses qui contient l'identifiant VPI / VCI de chaque adresse de circuit PVC, un ÉTAT « occupé » ou « au repos » et un identifiant d'équipement de station « noeud B » ;
B) à travers tous les ports physiques, envoyer (301), par le biais de chaque station « noeud B », un message de demande en vue d'une affectation de circuit PVC à mode ATM d'exploitation et de maintenance spéciale au contrôleur RNC avec l'adresse de circuit PVC à mode ATM, d'exploitation et de maintenance par défaut ;
C) suite à la réception du message de demande, rechercher, via le contrôleur RNC, dans ladite table d'adresses, et affecter (208) un canal de circuit PVC à mode ATM, spécial à tous les ports physiques de chaque station « noeud B » ayant envoyé le message de demande ;
D) envoyer (212), par le biais du contrôleur RNC, les paramètres IP à chaque station « noeud B » via tous les canaux de circuit PVC à mode ATM, spéciaux configurés.

2. Procédé selon la revendication 1, dans lequel il existe deux ensembles pour l'adresse de circuit PVC à mode ATM d'exploitation et de maintenance, dans lequel un ensemble est destiné à la configuration automatique du circuit virtuel à mode ATM de canal OAM spécifique, l'autre à la configuration manuelle du circuit virtuel à mode ATM de canal OAM spécifique.

3. Procédé selon la revendication 1, dans lequel, dans un état de départ du contrôleur RNC, chaque ÉTAT de la table d'adresses est défini sur « au repos ».

4. Procédé selon la revendication 1, dans lequel ladite étape A comprend en outre l'étape dans laquelle :
le contrôleur RNC définit une plage d'adresses de circuit PVC à mode ATM spéciale valide parmi des adresses à mode ATM, pour chaque station « noeud B » via un identifiant VPI / VCI de début et un identifiant VPI / VCI de fin, et ladite adresse de circuit PVC à mode ATM d'exploitation et de maintenance est dans ou hors de la plage d'adresses.

5. Procédé selon la revendication 1, dans lequel le message de demande de l'étape B comprend au moins un identifiant d'équipement de station « noeud B » exclusif.

6. Procédé selon la revendication 1, dans lequel le message de demande de l'étape B est envoyé (301) à travers tous les ports physiques disponibles tandis que la station « noeud B » est sous tension, et il est renvoyé en cas de non-réception d'un message de réponse en provenance du contrôleur RNC à l'issue d'une période de temps prédéfinie.

7. Procédé selon la revendication 1, dans lequel ladite étape B comprend en outre l'étape ci-dessous consistant à :
pour la station « noeud B » à laquelle le canal de circuit PVC à mode ATM d'exploitation et de maintenance spécial n'a pas été affecté, acheminer une cellule à mode ATM vers d'autres ports physiques disponibles de la station « noeud B », outre le port qui a reçu ladite cellule à mode ATM avec identifiant VPI / VCI obtenu dans la cellule à mode ATM reçue avant l'envoi dudit message de demande d'affectation de canal de circuit PVC à mode ATM d'exploitation et de maintenance spécial.

8. Procédé selon la revendication 5, dans lequel ladite étape C comprend en outre les étapes ci-dessous dans lesquelles :
c1) pour le message de demande valide reçu, le contrôleur RNC recherche dans ladite table d'adresses avec l'identifiant d'équipement de station « noeud B » contenu dans le message ;
c2) il contrôle l'ÉTAT afin de déterminer si l'ÉTAT est « occupé » ou « au repos » concernant le terme de table pour lequel l'identifiant d'équipement a été trouvé ;
c3) si l'ÉTAT est « au repos », il envoie alors un message de réponse via les ports physiques qui ont reçu les messages de demande avec ladite adresse de circuit PVC à mode ATM d'exploitation et de maintenance par défaut, dans lequel, ledit message de réponse comprend au moins un identifiant VPI / VCI dans ladite table d'adresses et une plage d'adresses de circuit PVC à mode ATM d'exploitation et de maintenance valide, et l'identifiant d'équipement de station « noeud B » ; et il met simultanément à jour l'ÉTAT correspondant comme « occupé »;
c4) concernant l'identifiant d'équipement qui n'a pas été trouvé à l'étape c2, il sélectionne un terme de table dont l'ÉTAT est « au repos » directement à partir de la table d'adresses, et il exécute ensuite les mêmes étapes que celles décrites dans l'étape c3 ;
c5) suite à la réception dudit message de réponse, la station « noeud B » vérifie l'identifiant d'équipement dans le message de réponse, si ledit identifiant d'équipement n'est pas un identifiant d'équipement de la station «noeud B », elle achemine (310) ensuite le message de réponse à d'autres ports physiques disponibles, distincts de celui ayant reçu ledit message de réponse, sinon, si l'identifiant d'équipement est l'identifiant d'équipement de la station « noeud B », elle affecte (309) alors le circuit PVC d'exploitation et de maintenance local spécial, l'adresse locale pour la configuration du circuit virtuel à mode ATM de canal OAM spécifique et la plage d'adresses à mode ATM, valide pour la configuration de la station « noeud B » sur la base du message de réponse.

9. Procédé selon la revendication 8, comprenant en outre les étapes ci-dessous consistant à :
rejeter (205) les messages non valides qui ne sont pas le message de demande d'affectation d'adresses de circuit PVC à mode ATM d'exploitation et de maintenance spécial de l'étape C1 ; et
ignorer le message de demande lorsque l'ÉTAT à l'étape c2 est « occupé »,

10. Procédé selon la revendication 8 ou 9, dans lequel ledit message valide ou ledit message non valide est déterminé selon le format du message de demande de circuit PVC à mode ATM d'exploitation et de maintenance spécial, les messages conformes au format du message étant jugés comme des messages valides, les autres comme des messages non valides.

11. Procédé selon la revendication 8, dans lequel ladite étape c1 comprend en outre les étapes ci-dessous consistant à :
lorsqu'une adresse d'une cellule à mode ATM reçue au niveau d'un port physique du contrôleur RNC n'est pas ladite adresse de circuit PVC à mode ATM d'exploitation et de maintenance par défaut, vérifier (209) si l'adresse de cellule à mode ATM existe dans la table d'adresses du port physique ; le cas échéant, poursuivre le processus (211 - 213) qui suit la détermination du type de message, sinon, vérifier encore (214) si l'adresse de cellule à mode ATM se situe dans la plage d'adresses de circuit PVC à mode ATM de la station « noeud B » ;
recevoir (215) la cellule à mode ATM dont l'adresse se situe dans le plage d'adresses et acheminer la cellule vers d'autres ports physiques ;
rejeter (216) la cellule à mode ATM dont l'adresse se situe au-delà de ladite plage d'adresses.

12. Procédé selon la revendication 8, dans lequel ladite étape c5 comprend en outre les étapes ci-dessous consistant à :
lorsque ledit identifiant d'équipement n'est pas l'identifiant d'équipement de la station « noeud B », vérifier (313) si l'adresse de cellule à mode ATM reçue se situe dans la plage d'adresses de circuit PVC à mode ATM valide de la station « noeud B » ou si elle se situe dans ladite table d'adresses ;
recevoir (315) la cellule à mode ATM dont l'adresse se situe dans la plage d'adresses de circuit PVC à mode ATM valide ou dans la table d'adresses, et acheminer la cellule vers d'autres ports physiques ;
rejeter (314) la cellule à mode ATM dont l'adresse se situe au-delà de ladite plage d'adresses de circuit PVC à mode ATM ou de la table d'adresses.

13. Procédé selon la revendication 1, comprenant en outre les étapes ci-dessous consistant à :
concernant la station « noeud B » qui a envoyé ledit message de demande de circuit PVC à mode ATM d'exploitation et de maintenance spécial mais qui n'a pas obtenu d'affectation de canal de circuit PVC à mode ATM d'exploitation et de maintenance spécial, lorsqu'un port physique quelconque reçoit une cellule à mode ATM dont l'adresse est ladite adresse de circuit PVC à mode ATM d'exploitation et de maintenance par défaut, transmettre de manière transparente le message de demande de circuit PVC à mode ATM d'exploitation et de maintenance spécial à d'autres ports physiques disponibles en dehors dudit port.

14. Procédé selon la revendication 1, dans lequel ladite étape D comporte en outre les étapes ci-dessous dans lesquelles :
la station « noeud B » envoie un message de demande de paramètre IP de serveur DHCP via tous les canaux de circuit PVC à mode ATM d'exploitation et de maintenance spéciaux configurés ;
le contrôleur RNC achemine et envoie (212) le message de demande au serveur DHCP via le port physique correspondant, en vue d'appliquer le paramètre IP ;
le serveur DHCP affecte une adresse IP pour la station a noeud B » et envoie un message d'affectation d'adresse IP de serveur DHCP ;
le port physique correspondant du contrôleur RNC indique (212) le paramètre IP qui est affecté par le serveur DHCP à la station « noeud B » pertinente par tous lesdits canaux de circuit PVC à mode ATM d'exploitation et de maintenance spéciaux configurés.

15. Procédé selon la revendication 1, dans lequel ladite étape D comporte en outre les étapes ci-dessous dans lesquelles :
la station « noeud B » envoie régulièrement le message indiquant le paramètre de circuit PVC de mode ATP d'exploitation et maintenance au contrôleur RNC via le canal de circuit PVC à mode ATM d'exploitation et de maintenance spécial configura ;
suite à la réception du message de rapport, le contrôleur RNC renvoie le message de réponse à la station « noeud B ».

16. Procédé selon la revendication 15, comportant en outre les étapes ci-dessous dans lesquelles :
le contrôleur RNC qui n'a pas reçu ledit message de rapport au cours d'une période de temps prédéterminée envoi un message d'alarme (211) au centre OMC-R ;
la station « noeud B » qui n'a pas reçu ledit message de réponse au cours d'une période de temps prédéterminée applique à nouveau le canal de circuit PVC à mode ATM d'exploitation et de maintenance spécial.
